# EUROPÄISCHE PATENTSCHRIFT

(11) **EP 3 173 219 B1**
(45) Veröffentlichungstag und Bekanntmachung des Hinweises auf die Patenterteilung: **15.01.2020**
(21) Anmeldenummer: 15196030.9
(22) Anmeldetag: 24.11.2015
(51) Int. Cl.: B29C 70/38

(54) **ABLEGEEINHEIT UND VERFAHREN ZUM HERSTELLEN EINES FASERVERBUNDBAUTEILS**
DEPOSITING UNIT AND METHOD FOR PRODUCING A FIBRE COMPOUND COMPONENT
UNITÉ DE RÉCEPTION ET PROCÉDÉ DE FABRICATION D'UN COMPOSANT EN FIBRES COMPOSITES

(43) Veröffentlichungstag der Anmeldung: 31.05.2017
(73) Patentinhaber: Airbus Defence and Space GmbH, 85521 Ottobrunn (DE)
(72) Erfinder: ENGEL, Franz, 81539 München (DE); WEIMER, Christian, 81539 München (DE); ORTH, Tilman, 80469 München (DE)
(74) Vertreter: Isarpatent

(56) Entgegenhaltungen:
- EP-A1- 1 342 555
- DE-A1-102014 101 447
- US-A1- 2014 102 625

## Beschreibung

Die vorliegende Erfindung betrifft eine Ablegeeinheit sowie ein Verfahren zum Herstellen eines Faserverbundbauteils.

Obwohl auf beliebige Faserverbundwerkstoffe und beliebige Bauteile anwendbar, werden die vorliegende Erfindung sowie die ihr zugrunde liegende Problematik in Bezug auf Carbon-Faser verstärkte Kunststoffe (CFK) und große Bauteile, beispielsweise Rumpfteile eines Luft- oder Raumfahrzeugs, näher erläutert.

Bisweilen werden große CFK-Bauteile zumeist mit der sogenannten Automated Fiber Placement (AFP) Technologie gefertigt. Dazu ist eine sehr groß dimensionierte Systemtechnik notwendig. Es handelt sich meist um einen an einem Portal aufgehängt laufenden Ablegeroboter, einem sogenannten Fiberplacement-Kopf oder Tapelege-Kopf, der Fasern auf einem formgebenden Werkzeug, beispielsweise der Negativform eines Rumpfabschnitts eines Luft- oder Raumfahrzeugs, ablegt. Dabei wird mit einer Überfahrt des Werkzeugs eine breite Legebahn mit einer Mehrzahl von (zum Beispiel 32) Faserbahnen oder -bändchen (Tape) parallel und direkt aneinander angrenzend abgelegt.

Ein von derartigen Anlagen abweichender Ansatz einer Faser-Legevorrichtung ist in der DE 20 2011 110 519 U1 beschrieben. Dabei ist ein Schienensystem mit einer Vielzahl von Schienen und mehrere Ablegerobotern vorgesehen, welche auf dem Schienensystem entlang der Schienen bewegbar sind. Die Ablegeroboter und das Schienensystem werden mittels eines zentralen Leitrechners gesteuert. Die Ablegeroboter sind jeweils ausgebildet, ein einzelnes Objekt in Form eines Rovings oder Faserbands auf einem Werkzeug abzulegen.

Die US 2014/102625 A1 offenbart eine Ablegeeinheit zum Herstellen eines Faserverbundbauteils, mit:einem Gehäuse und einer Mehrzahl an Faserspulen, welche bei einer Fortbewegung der Ablegeeinheit abwickelbar ausgebildet sind. Die Faserspulen sind dabei innerhalb des Gehäuses beweglich gelagert.

Es ist Aufgabe der vorliegenden Erfindung eine verbesserte Ablegeeinheit, sowie ein verbessertes Verfahren zum Herstellen eines Faserverbundbauteils bereitzustellen.

Erfindungsgemäß wird diese Aufgabe durch eine Ablegeeinheit mit den Merkmalen des Patentanspruchs 1 und/oder durch ein Verfahren mit den Merkmalen des Patentanspruchs 14 gelöst.

Demgemäß ist vorgesehen:
- Eine Ablegeeinheit zum Herstellen eines Faserverbundbauteils mit: einem Gehäuse; und einer Mehrzahl an Faserspulen, welche bei einer Fortbewegung der Ablegeeinheit abwickelbar ausgebildet sind, wobei die Faserspulen innerhalb des Gehäuses beweglich gelagert vorgesehen sind.
- Ein Verfahren zum Herstellen eines Faserverbundbauteils, mit den folgenden Verfahrensschritten: Bereitstellen eines formgebenden Werkzeugs und einer Ablegeeinheit, insbesondere einer erfindungsgemäßen Ablegeeinheit, wobei die Ablegeeinheit eine Mehrzahl lateral voneinander beabstandeter Faserspulen aufweist; Ablegen von Fasermaterial mittels der Ablegeeinheit, wobei das Fasermaterial von den Faserspulen abgewickelt und in Form mehrerer Legebahnen auf dem formgebenden Werkzeug abgelegt wird, wobei die Legebahnen zumindest teilweise mit einem Zwischenraum voneinander beabstandet abgelegt werden; laterales Umpositionieren der Ablegeeinheit um eine Breite einer Legebahn; und erneutes Ablegen von Fasermaterial mittels der Ablegeeinheit auf dem formgebenden Werkzeug in den Zwischenraum.

Die der vorliegenden Erfindung zugrunde liegende Idee besteht darin, bei einer Ablegeeinheit eine Mehrzahl von bei einer Fortbewegung der Ablegeeinheit abwickelbaren bzw. abrollbaren Faserspulen innerhalb eines Gehäuses beweglichund/oderjeweils lateral voneinander beabstandet zu lagern.

Vorzugsweise sind die Faserspulen unabhängig voneinander beweglich gelagert. Ferner sind die Faserspulen vorzugsweise bei einer Fortbewegung der Ablegeeinheit gleichzeitig abwickelbar ausgebildet und angeordnet.

Somit ist erfindungsgemäß eine Anpassung der Art und Weise einer Faserablage der Ablegeeinheit an unebene und/oder komplexe Werkzeuggeometrien ermöglicht, wobei dennoch mehrere Legebahnen des Fasermaterials, insbesondere sogenannte Fasertows (Faserkabel), -rovings (Faserstränge) oder -tapes (Faserbänder), in einem Arbeitsgang gleichzeitig abgelegt werden können.

Vorzugsweise sind die Faserspulen voneinander beabstandet gelagert. insbesondere sind sie um die Breite einer Legebahn bzw. eines Fasertows, -rovings oder -tapes voneinander beabstandet.

Abgelegt wird das Fasermaterial daher in zwei Arbeitsschritten. Nach einem ersten Ablegen, bei welchem mehrere dementsprechend mit einem Zwischenraum voneinander beabstandete Legebahnen gelegt werden, erfolgt ein zweites Ablegen um eine Legebahnbreite lateral versetzt in den Zwischenraum der Legebahnen.

Aufgrund ihrer beweglichen Lagerung sind die Faserspulen angepasst an Unebenheiten oder doppelte Krümmungen der Werkzeugoberfläche ausrichtbar. Vorteilhaft werden so verglichen mit einer Einzelablage der Fasertows, -rovings oder - tapes auch auf einem unebenen und/oder doppelt gekrümmten Werkzeug weniger benötigt.

Bei der Ablegeeinheit kann es sich um eine sich mechanisch unabhängig und/oder autonom fortbewegende Ablegeeinheit oder um eine Ablegeeinheit eines Fiberplacement- oder Tapelege-Kopfes einer AFP-Anlage handeln.

Bei dem Gehäuse kann es sich um jegliche Art einer mechanischen Hausung handeln. Das Gehäuse kann geschlossen oder an einer oder mehreren Seite offen ausgebildet sein. Insbesondere kann im Fall eines zylinderförmigen Gehäuses eine Mantelfläche teilweise oder ganz ausgespart vorgesehen sein. Auch eine allseitig offene rahmenartige Ausbildung des Gehäuses ist möglich. Ferner kann das Gehäuse einzeilig oder in mehrere Gehäuseabschnitte geteilt ausgebildet sein. Insbesondere kann es sich um zwei stirnseitige Endabschnitte des Gehäuses handeln, wobei die Faserspulen dazwischen angeordnet sind. Ferner können Gehäuseabschnitte im Bereich eines Zwischenraums zwischen den Faserspulen vorgesehen sein.

Im Inneren des Gehäuses befindet sich eine Halterungseinrichtung bzw. eine Lagerungseinrichtung, an der die Faserspulen gelagert sind. Die Faserspulen können jeweils einzeln oder gemeinsam an der Halterungseinrichtung bzw. Lagerungseinrichtung in dem Gehäuse gelagert vorgesehen sein. Die Beweglichkeit der Faserspulen kann durch eine Beweglichkeit der Faserspulen relativ zu Halterungseinrichtung und/oder durch eine Beweglichkeit der Halterungseinrichtung relativ zu dem Gehäuse realisiert sein.

Die Beweglichkeit der Faserspulen ist als eine rotatorische Beweglichkeit, das heißt eine Verschwenkbarkeit oder Verkippbarkeit vorgesehen. Alternativ oder zusätzlich kann eine translatorische Beweglichkeit (Auslenkbarkeit) vorgesehen sein. Eine Abwickelbarkeit bzw. Abrollbarkeit der Faserspulen bei einer Fortbewegung der Ablegeeinheit bleibt dabei vorzugsweise stets ermöglicht.

Ein Abwickeln bzw. Abrollen der Faserspuren kann durch die Fortbewegung der Ablegeeinheit hervorgerufen werden. In diesem Fall sind die Faserspulen um ihre Achse frei rotierbar gelagert. Alternativ oder zusätzlich kann das Abwickeln auch motorisch und/oder mechanisch durch eine Übersetzung angetrieben sein.

In den Unteransprüchen finden sich vorteilhafte Ausgestaltungen und Verbesserungen der Erfindung.

Gemäß der Erfindung ist zwischen den Faserspulen jeweils ein Zwischenraum vorgesehen, welcher zumindest abschnittsweise einen Bewegungsraum der benachbarten Faserspulen bildet. Die Faserspulen sind innerhalb des Bewegungsraums bewegbar. Vorteilhaft ist somit jede Faserspule unabhängig bewegbar. Somit ist das Fasermaterial mit jeder Faserspule in einer unterschiedlichen Ausrichtung ablegbar.

Gemäß einer vorteilhaften Ausführungsform sind die Faserspulen jeweils unabhängig voneinander in eine Schrägstellung verkippbar vorgesehen. Die Schrägstellung ist insbesondere durch Verkippen um eine parallel zu einer Fortbewegungsrichtung der Ablegeeinheit verlaufende Achse ermöglicht. Andere oder weitere Kippachsen sind alternativ oder zusätzlich möglich. Vorteilhaft können so Unebenheiten oder zweifache Krümmungen einer Lauffläche, insbesondere eines Werkzeugs, worauf die Ablegeeinheit läuft, durch Bewegung der Faserspulen kompensiert werden. Somit ist eine Faserablage auch auf komplex geformten oder unebenen Werkzeugen ermöglicht.

Gemäß einer Ausführungsform sind im Bereich des Zwischenraums der Faserspulen jeweils unabhängig voneinander radial verschiebbare Gehäuseabschnitte vorgesehen. Die Gehäuseabschnitte decken die Zwischenräume jeweils nach außen ab und sind relativ zu den Faserspulen und/oder zu einer Achse des Gehäuses in radialer Richtung verschiebbar vorgesehen. Die radiale Richtung bezeichnet hier eine radiale Richtung der Faserspulen und/oder eine radiale Richtung ausgehend von einer Achse des Gehäuses, welches insbesondere zylinderförmig ausgebildet ist. Vorteilhaft kann mit der radialen Verschiebbarkeit ein unterschiedliches Niveau der Gehäuseabschnitte vorgesehen werden, beispielsweise wenn eine Unebenheit eines Werkzeugs vorliegt. Dadurch kann eine Ablage des Fasermaterials der einzelnen Spulen in unterschiedlichen Ausrichtungen vorgenommen werden, was eine Ablage angepasst an Unebenheiten, insbesondere auch bei zweifach gekrümmten Werkzeugen, ermöglicht.

Gemäß einer Ausführungsform sind die Faserspulen ausgebildet, um angepasst an eine radiale Verschiebung der Gehäuseabschnitte in eine passende Schrägstellung zu verkippen. Insbesondere sind die Faserspulen dazu mit den Gehäuseabschnitten wirkverbunden ausgebildet. Beispielsweise kann eine gelenkige Verbindung, eine Verbindung über Zugbänder oder über elastische Verbindungselemente zwischen angrenzenden Faserspulen und Gehäuseabschnitten vorgesehen sein. Somit wird vorteilhaft eine Verkippung der Faserspulen selbsttätig angepasst vorgenommen, beispielsweise wenn eine Unebenheit eines Werkzeugs, welche zur radialen Verschiebung eines Gehäuseabschnitts führt, mit der Ablegeeinheit überfahren wird.

Gemäß einer Weiterbildung sind die Faserspulen jeweils verkippbar auf einer gemeinsamen Achse gelagert. Insbesondere weist die gemeinsame Achse für jede Faserspule eine eigene Aufnahme auf, die jeweils zur beweglichen Lagerung der Faserspule ausgebildet ist. Dabei kann zur einfacheren Austauschbarkeit der Faserspulen eine an der Aufnahme gelagerte Zwischenhülse vorgesehen sein, welche die Faserspule leicht austauschbar aufnimmt. Vorteilhaft ist somit eine einfache Realisierung der beweglichen Lagerung bereitgestellt.

Gemäß einer Ausführungsform ist eine Heizeinrichtung zum Aktivieren eines Harzes oder Binders des von den Faserspulen abzulegenden Fasermaterials vorgesehen. Beispielsweise kann als Heizeinrichtung eine LED, eine Laserdiode und/oder eine Heizwendel vorgesehen sein. Alternativ oder zusätzlich ist auch eine Heizung über zugeführtes Heizgas, wobei die Heizeinrichtung als Heizgasdüse vorgesehen ist, Infrarotlicht, wobei die Heizeinrichtung als Infrarotlampe vorgesehen ist, oder induzierte Wirbelströme, wobei die Heizeinrichtung als Magnet vorgesehen ist, möglich. Vorteilhaft wird so der Binder oder das Harz lokal und direkt beim Ablegen des Fasermaterials aktiviert. Somit kann das Fasermaterial beispielswiese direkt bei der Herstellung als sogenannte Preform vorstabilisiert werden. Mittels der Heizeinrichtung kann das Werkzeug und/oder das abzulegende Fasermaterial direkt vor, während oder nach der Ablage erwärmt werden.

Gemäß einer weiteren Ausführungsform ist ein Aktuator zur Vorbehandlung einer Faserlage des Fasermaterials vorgesehen. Die Faserlage kann dabei beispielsweise hinsichtlich ihrer Breite beeinflusst werden. Ferner ist denkbar, etwaige Fremdstoffe kurz vor der Ablage der Faserlage zu entfernen. Auch ein Schneiden und/oder Spalten (Splicen) der einzelnen Fasern oder der Faserlage ist denkbar. Alternativ oder zusätzlich ist ein Aktuator zur Vorbehandlung der Oberfläche eines Werkzeugs, auf welchem das Fasermaterial abzulegen ist, vorgesehen. Dieser kann beispielsweise zur Vorreinigung der Oberfläche dienen. Vorteilhaft wird somit die Qualität der Faserablage erhöht.

Gemäß einer vorteilhaften Ausführungsform ist eine Ablageeinrichtung zum definierten Ablegen zumindest einer Faserlage des Fasermaterials (4) vorgesehen. Die Ablageeinrichtung positioniert dabei das von der Mehrzahl von Faserspulen abgewickelte Fasermaterial auf einem Werkzeug. Ein definiertes Ablegen kann insbesondere als ein genaues Positionieren des Fasermaterials an einer vorbestimmten Position auf dem Werkzeug vorgesehen sein. Alternativ oder zusätzlich ist die Ablageeinrichtung zum Kompaktieren zumindest einer Faserlage des Fasermaterials vorgesehen. Vorteilhaft wird das Fasermaterial somit in einer kompaktierten Weise abgelegt, was eine Herstellung eines Faserverbundbauteils mit erhöhtem Faservolumengehalt ermöglicht.

Gemäß einer Weiterbildung ist die Ablageeinrichtung integral mit der Heizeinrichtung ausgebildet. Insbesondere ist dies bei einer magnetischen Ablageeinrichtung möglich. Somit ist ein gleichzeitiges Ablegen des Fasermaterials und Aktivieren des Binders oder Harzes ermöglicht.

Gemäß einer weiteren Ausführungsform ist ein der Ablageeinrichtung vorlaufender Sensor zur Messung der Faserqualität des Fasermaterials vor dem Ablegen vorgesehen. Somit ist vorteilhaft die Qualität von abzulegendem Fasermaterial gesichert. Bei dem Sensor kann es sich um unterschiedlichste Arten von Sensoren handeln, beispielsweise Laserlichtschnittsensor, Polarisationslichtsensor, Kontakt-Bildsensor (CIS, Contact Image Sensor) oder dergleichen. Es kann sich um die Erfassung einzelner oder mehrerer unterschiedlicher Qualitätsfaktoren, beispielsweise eine Messung der Breite, eines Faserstranggewichts oder eines Harzbenetzungsgrades der abzulegenden Faserlage handeln. Ferner können Verunreinigungen, beispielsweise Folienreste eines Backing-Papiers, erkannt werden. Alternativ oder zusätzlich ist der der Ablageeinrichtung vorlaufende Sensor zur Messung der Eignung der Oberfläche eines Werkzeugs oder Bauteils, auf welchem das Fasermaterial abzulegen ist, vorgesehen. Somit wird sichergestellt, dass eine Ablage nur auf geeignetem Untergrund, insbesondere einem Werkzeug, erfolgt. Dabei können beispielsweise Defekte oder Fremdstoffe an der Oberfläche erkannt werden. Somit ist es ermöglicht, über die Steuereinheit der Ablegeeinheit auf derartige Defekte oder Fremdstoffe zu reagieren. Zum einen kann die Ablage unterbrochen und eine Warnmeldung an einen Operateur ausgegeben werden. Des Weiteren kann, insbesondere automatisiert, eine Bahnkorrektur der Ablage vorgenommen werden. Ferner wäre es denkbar, automatisiert oder manuell gesteuert eine Gegenmaßnahme einzuleiten. Beispielsweise kann ein Aktuator zur Reinigung, insbesondere eine an der Ablegeeinheit vorgesehene Reinigungsdüse zur Ausgabe von Druckluft zur Entfernung eines Fremdstoffs aktiviert werden.

Gemäß einer noch weiteren Ausführungsform ist ein der Ablageeinrichtung nachlaufender Sensor zum Erfassen der Anordnung und/oder Qualität der Ablage des Fasermaterials vorgesehen. Somit ist vorteilhaft die Qualität von abgelegtem Fasermaterial gesichert. Auch hier kann es sich bei dem Sensor um unterschiedlichste Arten von Sensoren handeln, beispielsweise Laserlichtschnittsensor, Polarisationslichtsensor, Kontakt-Bildsensor (CIS, Contact Image Sensor) oder dergleichen. Insbesondere erkannt werden können somit Fehler der Ablage, wie beispielsweise Lücken zwischen den Faserlagen oder Bändern, eine Verschlingung (sogenannte Twists), eine Spaltung des Faserstrangs (sogenantes Splice), ein unerwünschter Überlapp oder eine unerwünschte Verknotung (sogenannte Fuzzballs) sowie etwaige Folienreste.

Gemäß einer Ausführungsform ist die Ablageeinrichtung integral mit einer Antriebseinrichtung zum Fortbewegen der Ablegeeinheit ausgebildet. Vorteilhaft übernimmt die Ablageeinrichtung somit zusätzlich die Funktion der Kraftübertragung auf die Lauffläche. Zusätzlich kann auch die Heizeinrichtung integral damit ausgebildet sein.

Gemäß einer Weiterbildung ist die Antriebseinrichtung innerhalb des Gehäuses vorgesehen. Das Gehäuse kann dabei als Abrollfläche zur Fortbewegung der Ablegeeinheit ausgebildet sein. Vorteilhaft weist das Gehäuse somit eine Doppelfunktionalität auf und es wird keine zusätzliche Abrollfläche der Antriebseinrichtung benötigt. Vorzugsweise weist es dazu eine zylinderförmige oder andersartig runde Form auf. Bei einer weiteren Ausführung kann die Antriebseinrichtung als eine außerhalb des Gehäuses vorgesehene Antriebsolle ausgebildet sein. Dabei kann die Antriebsrolle die Ablegeeinheit zusätzlich stabilisieren. Dabei kann das Gehäuse eine beliebige Form aufweisen, welche zur Aufnahme der Faserspulen geeignet ist.

Die obigen Ausgestaltungen und Weiterbildungen lassen sich, sofern sinnvoll, beliebig miteinander kombinieren. Ferner sind sämtliche Merkmale der Ablegeeinheit auf das Verfahren zum Herstellen eines Faserverbundbauteils übertragbar.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt.

Von den Figuren zeigen:
- Fig. 1A: eine schematische Seitenansicht einer Ablegeeinheit;
- Fig. 1B: eine schematische Vorderansicht der Ablegeeinheit gemäß Fig. 1A;
- Fig. 2A: eine schematische Seitenansicht einer Ablegeeinheit gemäß einer Ausführungsform;
- Fig. 2B: eine schematische Querschnittansicht der Ablegeeinheit gemäß Fig. 2A;
- Fig. 3A: eine schematische Seitenansicht einer Ablegeeinheit gemäß einer weiteren Ausführungsform;
- Fig. 3B: eine schematische Vorderansicht der Ablegeeinheit gemäß Fig. 3A;
- Fig. 4A: eine schematische Seitenansicht einer Ablegeeinheit gemäß einer noch weiteren Ausführungsform;
- Fig. 4B: eine schematische Vorderansicht der Ablegeeinheit gemäß Fig. 4A;
- Fig. 5: eine schematische Schnittansicht einer Ausführungsform einer Vorrichtung zur Herstellung eines Faserverbundbauteils;
- Fig. 6: eine schematische Schnittansicht einer weiteren Ausführungsform einer Vorrichtung zur Herstellung eines Faserverbundbauteils;
- Fig. 7: eine schematische Seitenansicht einer Ablegeeinheit gemäß einer weiteren Ausführungsform; und
- Fig. 8: eine schematische Draufsicht auf eine Vorrichtung zur Herstellung eines Faserverbundbauteils.

In den Figuren bezeichnen dieselben Bezugszeichen gleiche oder funktionsgleiche Komponenten, soweit nichts Gegenteiliges angegeben ist.

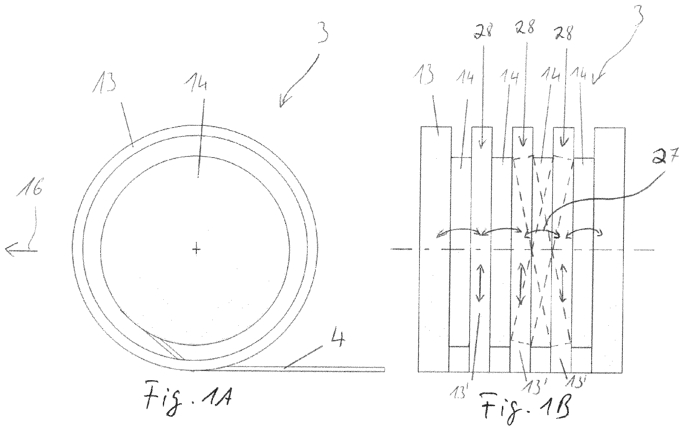

Fig. 1A zeigt eine schematische Seitenansicht einer Ablegeeinheit 3.

Die Ablegeeinheit 3 weist ein Gehäuse 13 auf, innerhalb welchem eine Mehrzahl von Faserspulen 14 gelagert sind.

Von den Faserspulen 14 ist jeweils gleichzeitig Fasermaterial 4 abwickelbar. Beispielsweise wird das Fasermaterial bei einer Fortbewegung der Ablegeeinheit 3 in einer Fortbewegungsrichtung 16 durch eine von der Fortbewegung hervorgerufenen auf das Fasermaterial 4 wirkenden Zugkraft abgewickelt. Das abgewickelte Fasermaterial 4 wird direkt auf einem hier nicht dargestellten Werkzeug abgelegt.

Bei der dargestellten Ausführungsform handelt es sich bei dem Gehäuse 13 um ein zylinderförmiges Gehäuse, welches zur Fortbewegung der Ablegeeinheit 3 auf seiner Mantelfläche abrollt.

Fig. 1B zeigt eine schematische Vorderansicht der Ablegeeinheit gemäß Fig. 1A.

Das zylinderförmige Gehäuse 13 ist im Bereich der Faserspulen 14 an seiner Mantelfläche teilweise ausgenommen vorgesehen.

Die Faserspulen 14 sind innerhalb des Gehäuses 13 beweglich gelagert und unabhängig voneinander in eine Schrägstellung verkippbar. Sie sind ferner entlang der Achse des zylinderförmigen Gehäuses 13 nebeneinander angeordnet und voneinander jeweils mit einem Zwischenraum 28 beabstandet.

Der Zwischenraum 28 bildet dabei abschnittsweise einen Bewegungsraum 27 der benachbarten Faserspulen 14, innerhalb welchem die Faserspulen 14 bewegbar sind. Die Beweglichkeit der Faserspulen 14 ist mit den eingezeichneten Pfeilen symbolisiert. Bei einer der Faserspulen ist ein zu beiden Seiten in eine Schrägstellung verkippter Zustand exemplarisch mit gestrichelten Linien dargestellt.

Im Bereich der Zwischenräume 28 sind jeweils Gehäuseabschnitte 13' vorgesehen, welche die Zwischenräume 28 nach außen abdecken. Die Gehäuseabschnitte 13' sind jeweils einzeln relativ zu den Faserspulen 14 und/oder zu einer Achse des zylinderförmigen Gehäuses 13 radial verschiebbar.

Die Faserspulen 14 sind mit den Gehäuseabschnitten 13' wirkverbunden ausgebildet. Beispielsweise kann die Wirkverbindung durch über den Umfang der Gehäuseabschnitte 13 verteilte, die jeweilige Faserspule 14 mit dem jeweiligen Gehäuseabschnitt 13' verbindende Zugbänder, gelenkige Schenkel, elastische Verbindungselemente oder dergleichen hergestellt sein. Demgemäß Verkippen die Faserspulen 14 aufgrund der Wirkverbindung zu den Gehäuseabschnitten 13' stets angepasst an eine radiale Verschiebung der Gehäuseabschnitte 13' in eine dazu passende Schrägstellung. Somit wird das Fasermaterial angepasst an eine Unebenheit abgelegt

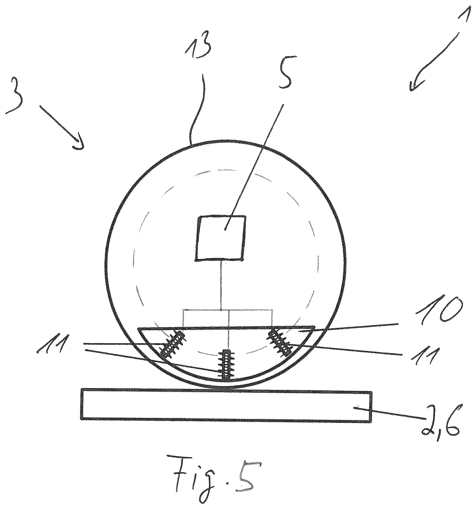

In dem Gehäuse 13 ist vorzugsweise eine hier zur besseren Übersichtlichkeit nicht dargestellte Antriebseinrichtung integriert. Insbesondere kann jeweils im Bereich der Stirnseiten des Gehäuses 13 eine Antriebseinrichtung integriert vorgesehen sein. Es ist ferner möglich, einzelne oder alle der Gehäuseabschnitte 13' mit einer Antriebseinrichtung vorzusehen. Alternativ oder zusätzlich kann auch eine sich über die gesamte Breite der Ablegeeinheit 3 erstreckende Antriebseinrichtung vorgesehen sein. Ferner kann alternativ oder zusätzlich eine außerhalb des Gehäuses vorgesehene Antriebsrolle als Antriebsvorrichtung vorgesehen sein. Auf die mögliche Ausbildung und Funktionsweise der Antriebsvorrichtung wird in Bezug auf die Figuren 5, 6 und 7 noch näher eingegangen.

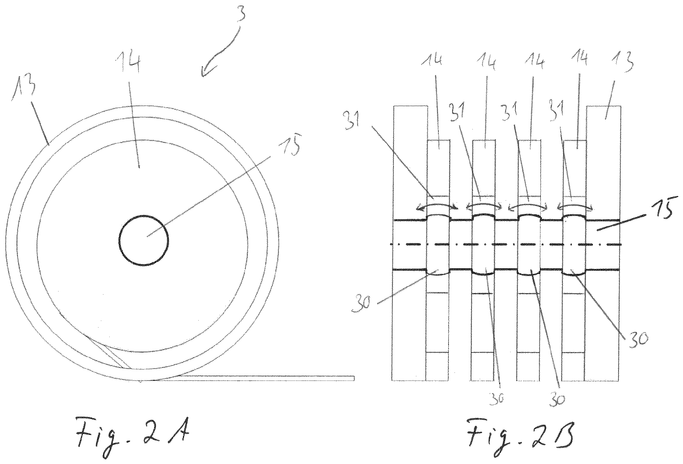

Fig. 2A zeigt eine schematische Seitenansicht einer Ablegeeinheit 3 gemäß einer Ausführungsform.

Die Ablegeeinheit 3 weist hier eine gemeinsame Achse 15 auf, an welcher die Faserspulen 14 gelagert vorgesehen sind.

Fig. 2B zeigt eine schematische Querschnittansicht der Ablegeeinheit 3 gemäß Fig. 2A. In der gezeigten Darstellung sind die Gehäuseabschnitte 13' zur besseren Übersichtlichkeit ausgeblendet.

Die gemeinsame Achse 15 ist in dem Gehäuse 13 gelagert und weist für jede Faserspule 14 eine eigene Aufnahme 30 auf, die jeweils zur beweglichen Lagerung der Faserspule 14 ausgebildet ist.

An jeder der Aufnahmen 30 ist eine Zwischenhülse 31 vorgesehen, welche relativ zur jeweiligen Aufnahme 30 in eine Schrägstellung verkippbar vorgesehen ist. Die Aufnahme 30 weist dazu eine konvexe Außenseite auf. Auf der Zwischenhülse 31 ist jeweils die Faserspule 14 axial gesichert gelagert. Die Zwischenhülse 31 stellt eine Kontaktfläche bereit, welche zu einer inneren Kontaktfläche der Faserspulen 14 korrespondiert. Beispielsweise kann es sich um zylinderförmige Kontaktflächen handeln. Somit sind die Faserspulen 14 leicht austauschbar.

Bei einer weiteren Ausführungsform können die Faserspulen 14 auch ohne eine Zwischenhülse 31 direkt auf der Aufnahme 30 aufgenommen vorgesehen sein. In diesem Fall ist zusätzlich eine axiale Sicherung gegen ein axiales Verschieben der Faserspulen 14, beispielsweise in Form von Abstandshülsen, vorgesehen.

Bei einer noch weiteren Ausführung kann die Achse 15 als durchgehend zylindrische Achse ausgebildet sein, wobei die Aufnahmen 30, welche die Verkippbarkeit bereitstellen, in die Faserspulen integriert vorgesehen sind. In diesem Fall können die Faserspulen, beispielsweise mit jeweils dazwischen angeordneten Abstandshülsen zur Bereitstellung der Zwischenräume 28, auf die Achse 15 aufgefädelt sein.

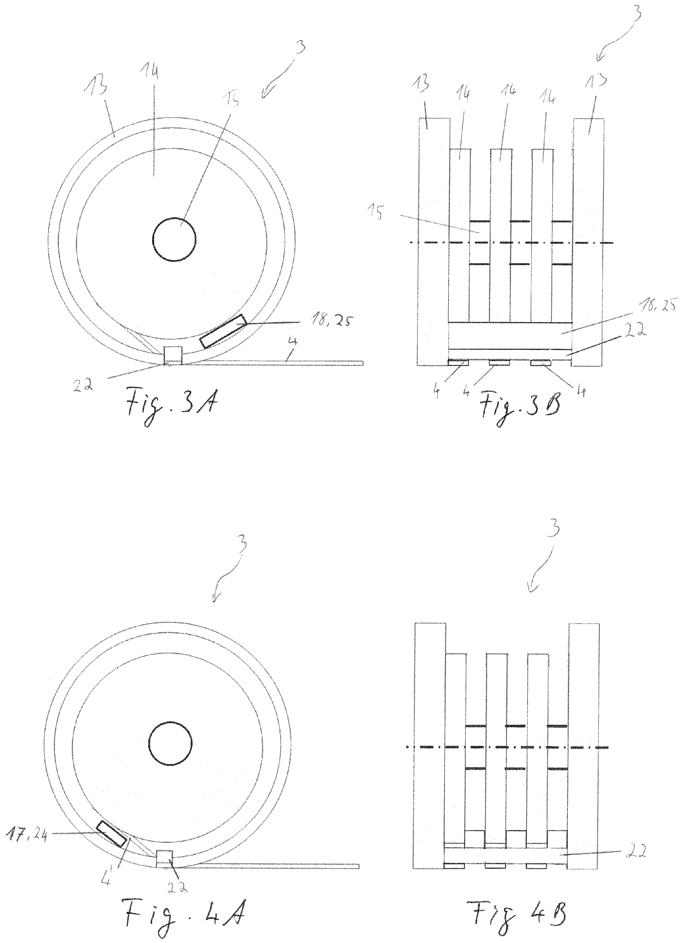

Fig. 3A zeigt eine schematische Seitenansicht einer Ablegeeinheit 3 gemäß einer noch weiteren Ausführungsform.

Bei dieser Ausführungsform ist eine Ablageeinrichtung 22 zum definierten Ablegen und/oder Kompaktieren des Fasermaterials 4 vorgesehen. Die Ablageeinrichtung 22 ist an dem Gehäuse gelagert.

Des Weiteren sind bei dieser Ausführungsform ein der Ablageeinrichtung 22 nachlaufender Sensor 18 und eine Heizeinrichtung 25 vorgesehen.

Der nachlaufende Sensor 18 ist zum Erfassen der Anordnung und/oder Qualität der Ablage des Fasermaterials 4 vorgesehen. Es kann sich bei dem nach laufenden Sensor 18 um unterschiedlichste Arten von Sensoren handeln. Beispielsweise kann ein Laserlichtschnittsensor, Polarisationslichtsensor, Kontakt-Bildsensor (CIS, Contact Image Sensor) oder dergleichen vorgesehen sein. Somit können Fehler der Ablage des Fasermaterials 4 erkannt werden. Beispielsweise kann es sich bei mittels des Sensors 18 erkennbaren Fehlern des abgelegten Fasermaterials 4 um Lücken zwischen den abgelegten Faserlagen oder Bändern (Tapes), eine Verschlingung (sogenannten Twists), eine Spaltung eines Faserstrangs (sogenanntes Splice), ein unerwünschter Überlapp oder eine unerwünschte Verknotung (sogenannte Fuzzballs) sowie etwaige unerwünschte Folienreste handeln.

Die Heizeinrichtung 25 ist hier beispielhaft in einem gemeinsamen Gehäuse mit dem nachlaufenden Sensor 18 angeordnet. Ebenso können auch getrennte Gehäuse für die Heizeinrichtung 25 und den nachlaufenden Sensor 18 vorgesehen sein.

Die Heizeinrichtung 25 ist zum Aktivieren eines Harzes oder Binders des von den Faserspulen 14 abzulegenden Fasermaterials 4 vorgesehen. Beispielsweise kann als Heizeinrichtung eine LED, eine Laserdiode und/oder eine Heizwendel vorgesehen sein. Alternativ oder zusätzlich ist auch eine Beheizung des Fasermaterials 4 über extern zugeführtes Heizgas möglich. In diesem Fall ist die Heizeinrichtung 25 als Heizgasdüse ausgebildet. Ferner kann es sich bei der Heizeinrichtung 25 um eine Infrarotlampe zur Aussendung von Infrarotlicht oder um einen Magneten zum Induzieren von Wirbelströmen in einer ferromagnetischen Werkzeugoberfläche handeln. Durch die von der Heizeinrichtung 25 auf das Fasermaterial wirkende Wärme wird ein Binder oder ein Harz lokal und direkt vor, bei oder nach dem Ablegen des Fasermaterials 4 aktiviert. Somit kann das abgelegte Fasermaterial 4, beispielsweise in Form eines Fasergeleges, als sogenannte Preform vorstabilisiert werden.

Fig. 3B zeigt eine schematische Vorderansicht der Ablegeeinheit 3 gemäß Fig. 3A. Bei dieser Darstellung sind die Gehäuseabschnitte 13' zur besseren Übersichtlichkeit ausgeblendet.

Die Ablageeinrichtung 22 verläuft hier beispielhaft durchgehend über den gesamten Bereich der Faserspulen 14. Alternativ kann für jede Faserspule 14 eine eigene, einzeln zugeordnete Ablageeinrichtung 22 vorgesehen sein. In diesem Fall wird die einer Faserspule zugeordnete Ablageeinrichtung 22 gemeinsam mit der Faserspuren 14 verkippt.

Die Ablageeinrichtung 22 ist beispielsweise als mit einer Werkzeugoberfläche zusammenwirkender Magnet ausgebildet, welcher das Fasermaterial 4 auf eine damit magnetisch zusammenwirkende Werkzeugoberfläche aufdrückt. Bei einer solchen magnetischen Ausbildung der Ablageeinrichtung kann diese auch gleichzeitig als eine Antriebseinrichtung ausgebildet sein.

Der nachlaufenden Sensor 18 und die Heizeinrichtung 25 erstrecken sich ebenfalls über die gesamte Breite des Bereichs der Faserspulen 14 zwischen den stirnseitigen Abschnitten des Gehäuses 13. Alternativ kann auch hier für jede Faserspule 14 ein eigener, einzeln zugeordneter nachlaufenden Sensor 18 und/oder eine eigene, einzeln zugeordnete Heizeinrichtung 25 vorgesehen sein.

Fig. 4A zeigt eine schematische Seitenansicht einer Ablegeeinheit 3 gemäß einer weiteren Ausführungsform. Fig. 4B zeigt eine schematische Vorderansicht der Ablegeeinheit 3 gemäß Fig. 4A.

Bei dieser Ausführungsform sind ein der Ablageeinrichtung 22 vorlaufenden Sensor 17 und ein Aktuator 24 vorgesehen. Beispielhaft sind der vorlaufende Sensor 17 und der Aktuator 24 in einem gemeinsamen Gehäuse angeordnet. Ebenso können einzelne Gehäuse für den Sensor 17 und den Aktuator 24 vorgesehen sein.

Der vorlaufende Sensor 17 dient zur Messung der Faserqualität des Fasermaterials 4 vor dem Ablegen. Bei dem Sensor 17 kann es sich um unterschiedlichste Arten von Sensoren handeln, beispielsweise um einen Laserlichtschnittsensor, Polarisationslichtsensor, Kontakt-Bildsensor (CIS, Contact Image Sensor) oder dergleichen.

Mittels des Sensors 17 können einzelne oder mehrere unterschiedliche Qualitätsfaktoren erfasst werden. Beispielsweise kann für jede Faserspule einzelnen oder für alle Faserspuren gemeinsam eine Messung der Breite, des Faserstranggewichts oder des Harzbenetzungsgrades der abzulegenden Faserlagen des Fasermaterials 4 vorgesehen sein. Ferner können mittels des Sensors 17 auch Verunreinigungen des Fasermaterials 4 vor dem Ablegen, wie beispielsweise Folienreste eines Backing-Papiers, erkannt werden.

Alternativ oder zusätzlich ist der vorlaufende Sensor 17 zur Messung der Eignung der Oberfläche eines Werkzeugs, auf welchem das Fasermaterial 4 abzulegen ist, vorgesehen. Somit wird sichergestellt, dass eine Ablage nur auf geeignetem Untergrund, insbesondere dem Werkzeug, erfolgt. Dabei können beispielsweise Defekte oder Verunreinigungen bzw. Fremdstoffe an der Oberfläche des Werkzeugs erkannt werden. Somit ist es ermöglicht, auf derartige Defekte oder Verunreinigungen zu reagieren.

Zum einen kann als Reaktion die Ablage des Fasermaterials 4 unterbrochen und eine Warnmeldung an einen Operateur ausgegeben werden. Des Weiteren kann, insbesondere automatisiert, eine Bahnkorrektur der Ablage des Fasermaterials 4 vorgenommen werden. Ferner kann als Reaktion automatisiert oder manuell gesteuert eine Gegenmaßnahme mittels des Aktuators 24 eingeleitet werden. Beispielsweise kann der Aktuator 24 als Reinigungsdüse zur Ausgabe von Druckluft zur Entfernung eines Fremdstoffs ausgebildet sein. Bei Erkennung einer Verunreinigung kann der Aktuator 24 so zur Reinigung der Werkzeugoberfläche aktiviert werden. Alternativ kann es sich auch um einen mechanischen Aktuator, beispielsweise eine Reinigungsbürste, handeln.

Ferner kann der Aktuator 24 alternativ oder zusätzlich zur Vorbehandlung einer Faserlage 4' des Fasermaterials 4 für jede Faserspule einzelnen oder für alle Faserspuren gemeinsam ausgebildet sein. Auch hier kommt Ausbildung des Aktuators 24 als Reinigungsdüse zur Reinigung der Faserlage 4' infrage.

Fig. 5 zeigt eine schematische Schnittansicht einer Ausführungsform einer Vorrichtung 1 zur Herstellung eines Faserverbundbauteils.

Die Vorrichtung 1 weist eine Ablegeeinheit 3 und ein formgebendes Werkzeug 2 auf. Bei der Ablegeeinheit 3 kann es sich um eine gemäß jeder der Fig. 1 bis 4B ausgebildete Ablegeeinheit 3 handeln.

Das formgebende Werkzeug 2 ist als ferromagnetische Lauffläche 6 für die Ablegeeinheit 3 ausgebildet.

Die Ablegeeinheit 3 weist ein zylinderförmiges, insbesondere kreiszylinderförmiges, Gehäuse 13 auf. Innerhalb des Gehäuses 13 ist eine beweglich entlang der Innenwand des Gehäuses 13 laufende Antriebseinrichtung 10 vorgesehen. Die Antriebseinrichtung 10 ist demnach innerhalb des Gehäuses 13 angeordnet vorgesehen. Das Gehäuse 13 ist dabei als Abrollfläche zur Fortbewegung der Ablegeeinheit 3 ausgebildet.

Die Antriebseinrichtung 10 ist als zylinderabschnittförmiges, in Umfangsrichtung des Gehäuses 13 bewegliches Pendel ausgebildet und weist in unterschiedliche radiale Richtungen wirkende, einzeln ansteuerbare Magnete 11 auf.

Wird die Antriebseinrichtung 10 durch ein Zusammenwirken der Magnete 11 mit der ferromagnetischen Lauffläche 6 hinsichtlich ihrer Ausrichtung relativ zum Gehäuse 13 verlagert, bringt dies auch das Gehäuse 13 dazu, in Richtung Antriebseinrichtung 10 zu folgen bzw. zu rollen.

Die Magnete 11 werden zur Fortbewegung der Ablegeeinheit 3 mittels einer Steuereinrichtung 5 entsprechend angesteuert.

Alternativ zu einem frei beweglichen Pendel können an der Innenseite des Gehäuses 13 auch Führungsvorrichtungen, beispielsweise ein Schienensystem oder dergleichen, zur Führung der Antriebseinrichtung 10 vorgesehen sein.

Die hier exemplarisch gezeigte Antriebseinrichtung 10 kann an unterschiedlichen Stellen des Gehäuses 13 einer Ablegeeinheit 3 angeordnet sein. Es können auch mehrere derartiger Antriebseinrichtungen 10 vorgesehen sein.

Ferner ist es denkbar, eine derartige Antriebsvorrichtung 10 anstatt in einem zylindrischen Gehäuse 13 einer Ablegeeinheit 3 in einer außerhalb des Gehäuses 13 angeordneten zylindrischen Antriebsrolle in gleicher Weise vorzusehen.

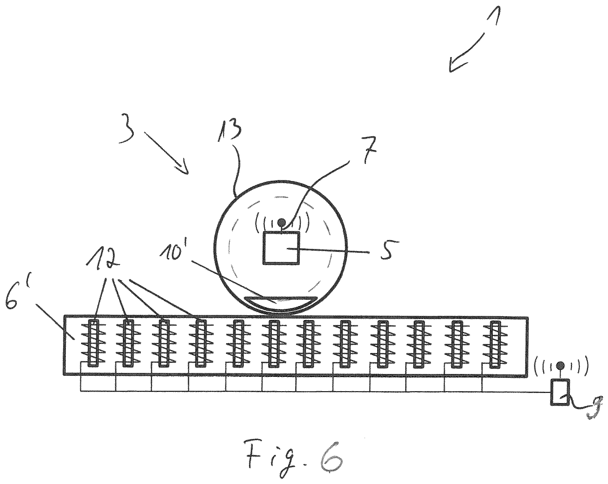

Fig. 6 zeigt eine schematische Schnittansicht einer weiteren Ausführungsform einer Vorrichtung 1 zur Herstellung eines Faserverbundbauteils.

Die Vorrichtung 1 weist eine Ablegeeinheit 3 auf, wobei es sich ebenfalls um eine gemäß jeder der Fig. 1 bis 4B ausgebildete Ablegeeinheit 3 handeln kann.

Bei dieser Ausführungsform weist die Lauffläche 6' eine Vielzahl von steuerbaren Magneten 12 auf. Die Ablegeeinheit 3 weist eine damit zusammenwirkende Antriebseinrichtung 10' auf, welche beispielhaft ebenfalls als freibewegliches entlang der Gehäuseinnenfläche bewegliches Pendel vorgesehen ist. Es handelt sich hier insbesondere um ein als ferromagnetisches Masseelement ausgebildetes Pendel. Alternativ oder zusätzlich können auch permanente oder steuerbare Magnete in die Antriebseinrichtung 10' integriert vorgesehen sein.

Die steuerbaren Magnete 12 sind mit einer Empfangseinrichtung 14 gekoppelt, welche ausgebildet ist, Steuerbefehle der Steuereinrichtung 5 der Ablegeeinheit 3 an die einzelnen Magnete 12 weiterzugeben. Die Steuereinrichtung 5 ist mit Kommunikationsmitteln 7 der Ablegeeinheit 3 gekoppelt, sodass Steuersignale an die Empfangseinrichtung 14 gesendet werden können.

Somit ist die Steuereinrichtung 5 eingerichtet, die steuerbaren Magnete 12 einzeln in zur Fortbewegung der Ablegeeinheit 3 geeigneter Weise anzusteuern und dabei ein magnetisches Feld zur Anziehung der Antriebseinrichtung 10' zu erzeugen. Wird die Antriebseinrichtung 10' von einem seitlich davon angeordneten Magneten 12 angezogen, so wird diese relativ zum Gehäuse 13 der Ablegeeinheit 3 aus einer Ruhestellung ausgelenkt. Somit wird das Gehäuse 13 und damit die gesamte Ablegeeinheit 3 dazu gebracht, in Richtung des das Magnetfeld momentan erzeugenden Magneten 12 zu folgen bzw. zu rollen.

Die Magnete 12 werden zur Fortbewegung des Ablegeeinheit 3 mittels der Steuervorrichtung 5 entsprechend der gewünschten Fortbewegung der Ablegeeinheit 3 angesteuert.

Auch die hier exemplarisch gezeigte Antriebseinrichtung 10 kann an unterschiedlichen Stellen des Gehäuses 13 einer Ablegeeinheit 3 angeordnet sein. Es können auch mehrere derartiger Antriebseinrichtungen 10 vorgesehen sein.

Ferner ist es denkbar, auch eine derartige Antriebsvorrichtung 10 anstatt in einem zylindrischen Gehäuse 13 einer Ablegeeinheit 3 in einer außerhalb des Gehäuses 13 angeordneten zylindrischen Antriebsrolle in gleicher Weise vorzusehen.

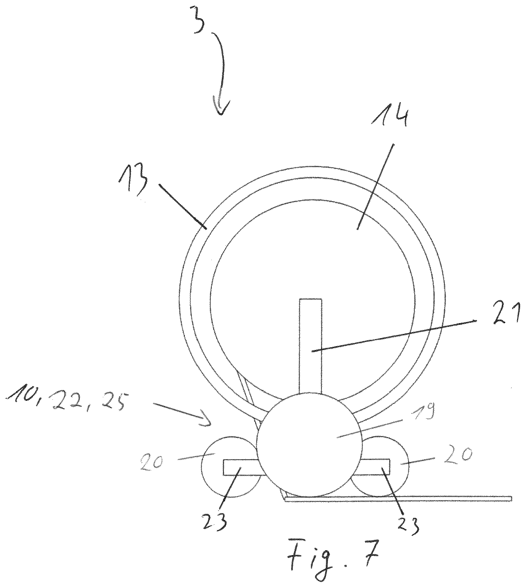

Fig. 7 zeigt eine schematische Seitenansicht einer Ablegeeinheit 1 gemäß einer weiteren Ausführungsform.

Die Antriebseinrichtung 10 ist hier als eine mit dem Gehäuse 13 gekoppelte Antriebsrolle 19 ausgebildet. Die Antriebsrolle 19 kann ein gleiches Funktionsprinzip wie die in Fig. 5 oder 6 gezeigte Antriebseinrichtung 10 oder 10' aufweisen, wobei ein magnetisches oder ferromagnetisches Pendel innerhalb der Antriebsrolle 19 läuft.

Alternativ oder zusätzlich können in die Antriebsrolle 19 auch eine Mehrzahl radial ausgerichteter Elektromagnete integriert sein, wobei jeweils ein zum Zusammenwirken mit der Lauffläche passend ausgerichteter Magnet zur Fortbewegung ansteuerbar ist.

Ferner können in der Antriebsrolle 19 alternativ oder zusätzlich Permanentmagnete und/oder ein ferromagnetisches Material integriert vorgesehen sein, wobei ein Antrieb der Antriebsrolle 19 mittels eines magnetischen Feldes vorgesehen ist, das von einer für die Ablegeeinheit 3 vorgesehenen zugeordneten Lauffläche erregbar ist. Die Lauffläche kann dazu mit einer Vielzahl steuerbarer Magnete versehen sein, wie beispielhaft in Bezug auf Fig. 6 beschrieben.

Die Antriebseinrichtung 10 ist über eine Koppeleinrichtung 21 mit dem Gehäuse 13 gekoppelt und trägt das Gehäuse 13. Im Unterschied zu den vorangehend beschriebenen Ablegeeinheiten 3 rollt zur Fortbewegung das Gehäuse 13 hier somit nicht selbst auf der Lauffläche 6 ab. Diese Funktion wird stattdessen von der Antriebsrolle 19 und den Stützrollen 20 erfüllt.

Zusätzlich zur Antriebseinrichtung 10 ist bei dieser Ausführungsform auch die Ablageeinrichtung 22 mit der Antriebsrolle 19 gebildet. Die Ablageeinrichtung 22 dient zum definierten Ablegen und/oder Kompaktieren einer Faserlage des Fasermaterials 4. Die Ablegeeinheit 3 kann bei dieser Ausführungsform somit vorteilhaft auch eingesetzt werden, um bereits abgelegtes Fasermaterial zu kompaktieren.

Die mittels der Ablageeinrichtung 22 zum definierten Ablegen und/oder Kompaktieren aufbringbaren Kräfte können über die Stärke des zum Fortbewegen und/oder Halten der Ablegeeinheit 3 auf der Lauffläche vorgesehene Magnetfeldes reguliert bzw. eingestellt werden.

Die nachlaufende Stützrolle 20 kann hier als ein nachlaufendes Sensorsystem ausgebildet sein, welches eine gleiche Funktionalität wie der nachlaufende Sensor 18 aufweist. Alternativ oder zusätzlich können die Stützrollen 20 zum Kompaktieren des Fasermaterials 4 vorgesehen sein.

Die Antriebsrolle 19 ist ferner als Heizeinrichtung 25 zum Aktivieren eines Harzes oder Binders einer abgelegten Faserlage des Fasermaterials 4 vorgesehen. Insbesondere ist die Antriebsrolle 19 mit einem magnetischen Antrieb vorgesehen, der bei Bewegung der Ablegeeinheit 3 Wirbelströme in der Antriebsrolle und/oder in dem Werkzeug erzeugt, sofern diese ein ferromagnetisches Material enthalten. Die Wirbelströme heizen die Antriebsrolle und/oder die Lauffläche aufgrund deren elektrischen Widerstand entsprechend auf. Die Heizeinrichtung 25 ist somit als eine sich bei Fortbewegung aufheizende Antriebsrolle 19 und/oder als eine die Lauffläche aufheizende Antriebsrolle 19 ausgebildet.

Vorzugsweise ist eine integrierte Ausbildung der Antriebsrolle 19 als Ablageeinrichtung 22 zum definierten Ablegen und/oder Kompaktieren und als Heizeinrichtung 25 zum Aktivieren eines Harzes oder Binders vorgesehen.

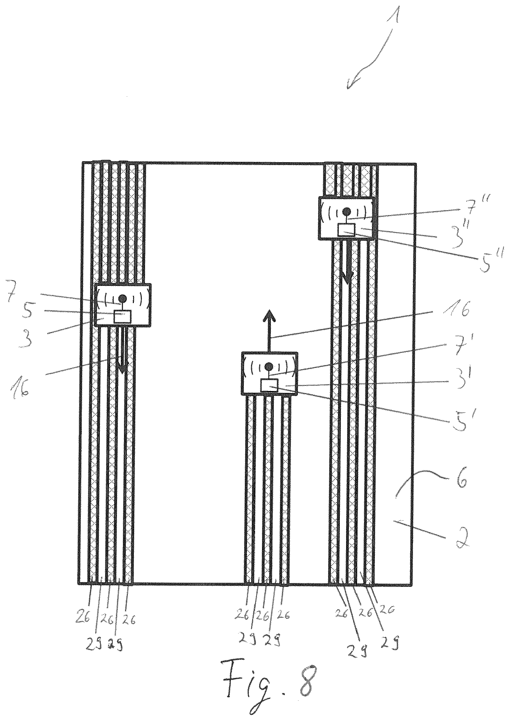

Fig. 8 zeigt eine schematische Draufsicht auf eine Vorrichtung zur Herstellung eines Faserverbundbauteils.

Die Vorrichtung 1 weist ein formgebendes Werkzeug 2 sowie eine Mehrzahl von Ablegeeinheiten 3, 3', 3" auf. Das Werkzeug 2 stellt gleichzeitig eine Lauffläche 6 für die Ablegeeinheiten 3, 3', 3" dar.

Die Ablegeeinheiten 3, 3', 3" sind gemäß einer der vorangehenden Figuren 1 bis 7 ausgebildet.

Die Ablegeeinheiten 3, 3', 3" sind jeweils zum Ablegen eines Fasermaterials 4 auf dem formgebenden Werkzeug 2 ausgebildet. Sie weisen jeweils eine Steuereinrichtung 5, 5', 5" auf, welche ausgelegt ist, die jeweilige Ablegeeinheit 3; 3'; 3" zum automatischen Zusammenwirken mit den weiteren Ablegeeinheiten 3, 3', 3" zu einem gemeinsamen Ablegen einer vorbestimmten Faseranordnung anzusteuern.

Dargestellt sind die Ablegeeinheiten 3, 3', 3" während des Ablegens des Fasermaterials 4, wobei rein beispielhaft eine Anzahl von drei Ablegeeinheiten 3, 3', 3" dargestellt ist. Es kann sich anstatt dreier um eine beliebige Mehrzahl von Ablegeeinheiten 3, 3', (...), 3n handeln.

Die Ablegeeinheiten 3, 3', 3" sind jeweils zur autonomen Fortbewegung auf der Lauffläche 6 ausgebildet. Sie weisen dementsprechende nicht im einzelnen dargestellte Sensoren und eine Antriebseinrichtung auf, welche mit der Steuervorrichtung 5, 5', 5" zur autonomen Fortbewegung zusammenwirken. Die Sensoren erfassen bereits mit Fasermaterial 4 belegte Bereiche, Randbereiche des Werkzeugs 2 sowie weitere Ablegeeinheiten. Ferner weisen die Ablegeeinheiten 3, 3', 3" jeweils Kommunikationsmittel 7, 7', 7" auf, welche zur Kommunikation der Ablegeeinheiten 3, 3', 3" untereinander dienen. Somit kann eine Abstimmung des Musters oder der Aufteilung der Faseranordnung zum Ablegen derselben unter den Ablegeeinheiten 3, 3', 3" flexibel erfolgen.

Eine Ablegeeinheit wird durch die Steuereinrichtung 5, 5'; 5" derart angesteuert, dass ein nächstliegender Abschnitt des Werkzeugs 2, welcher mit einer Faserlage des Fasermaterials 4 zu belegen ist, in einer geometrisch einfach zu erfassenden Weise, insbesondere einer geraden Linie, belegt wird.

Durch die Kommunikationsmittel 7, 7', 7" werden Informationen über bereits belegte Abschnitte unter den Ablegeeinheiten geteilt. Somit kreuzen sich die Fortbewegungsbahnen der Ablegeeinheiten nur, falls dies für das abzulegende Muster der Faseranordnung gewünscht ist oder falls sich die eine Ablegeeinheit zu einem neuen Startpunkt bewegt.

Das Fasermaterial 4 wird mittels der Ablegeeinheiten 3, 3', 3" bei Fortbewegung derselben von der Mehrzahl der jeder Ablegeeinheit 3, 3', 3" eigenen Faserspulen 14 abgewickelt und in Form mehrerer Legebahnen 26 auf dem formgebenden Werkzeug 2 abgelegt. Die Legebahnen 26 werden dabei aufgrund der lateralen Beabstandung der Faserspulen 14 mit einem Zwischenraum 29 voneinander beabstandet abgelegt.

Bezugnehmend auf die Ausführungsform gemäß Fig. 1 werden, sofern das Werkzeug 2 eine Unebenheit aufweist, an der Stelle der Unebenheit die Gehäuseabschnitte 13' an die Unebenheiten angepasst in radialer Richtung verschoben. Ferner werden die Faserspulen 14 an die Unebenheit angepasst in eine Schrägstellung verschwenkt, um eine an die Unebenheit ebenfalls angepasste Ablage des Fasermaterials 4 bereitzustellen. Die Größe des Zwischenraums 29 kann somit an der Stelle einer Unebenheit variieren. Ferner ist es möglich, dass bei vollständigem Verkippen der Faserspulen lokal im Bereich der Unebenheit kein Zwischenraum mehr vorhanden ist.

Bei Erreichen eines Randes oder einer Begrenzung des Werkzeugs 2 oder eines bereits mit Fasermaterial 4 in der gewünschten Weise belegten Abschnitts ändert die Ablegeeinheit 3; 3'; 3" von der Steuereinrichtung angesteuert ihre Fortbewegungsrichtung und positioniert sich lateral um eine Breite einer Legebahn 26 um. Beispielsweise dreht die Ablageeinheit mit einem Versatz einer Breite einer Faserlage bzw. einer Legebahn des Fasermaterials 4 um. Anschließend wird bei einer Fortbewegung in entgegengesetzter Richtung erneut Fasermaterial 4 mittels der Ablegeeinheit 3 um die Breite einer Legebahn versetzt auf dem formgebenden Werkzeug 2 abgelegt, wobei das Fasermaterial in den Zwischenraum 27 der zuvor gelegten Legebahnen 26 abgelegt wird.

Sind angrenzend keine freien Abschnitte des Werkzeugs vorhanden, bewegt sich die Ablegeeinheit zu einem neuen Startpunkt, welcher noch nicht mit einer gewünschten Faserlage belegt ist.

Die Ablegeeinheiten 3, 3', 3" weisen jeweils Kommunikationsmittel 7, 7', 7" auf. Der Startpunkt wird vorzugsweise anhand der von den anderen Ablegeeinheiten durch die Kommunikationsmittel übermittelten Informationen an einer Stelle des Werkezeugs gewählt, an welcher noch keine Ablage erfolgt ist.

Dieses Vorgehen wird insbesondere in autonomer Weise solange weitergeführt, bis keine freien Abschnitte des Werkzeugs 2 mehr vorhanden sind, an welchen die vorbestimmte Faseranordnung eine Ablage vorsieht. Somit wird vorzugsweise das komplette formgebende Werkzeug 2 mit Fasermaterial 4 belegt.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise ist es denkbar, die Faserspulen als Faservorratsspulen oder als Faser-Umlenkspulen vorzusehen. Im Fall von Faserumlenkspulen ist eine externe Faser-Zuführeinrichtung vorgesehen, welche das Fasermaterial zu den Faserspulen zuführt. Die Faserspulen lenken in diesem Fall das Fasermaterial an Unebenheiten eines Werkzeugs angepasst um.

Beispielsweise handelt es sich bei der Antriebseinrichtung ferner nicht notwendigerweise um ein Pendel. Alternativ oder zusätzlich zu einem Pendel können auch an einem innerhalb der Ablegeeinheit vorgesehenen Führungssystem bewegliche steuerbare Magnete vorgesehen sein.

Gemäß einer weiteren Ausführungsform kann eine Außenhaut oder eine nahe an einer Außenhaut vorgesehene Schicht der Ablegeeinheit mittels einer Ansteuerung magnetisierbar ausgebildet sein. Insbesondere können ansteuerbare Elektromagnete in die Außenhaut der Ablegeeinheit integriert vorgesehen sein. Zur Fortbewegung der Ablegeeinheit wird das Magnetfeld durch eine entsprechende Ansteuerung in der gewünschten Fahrtrichtung entlang der Außenhaut bzw. magnetisierbaren Schicht verschoben.

Zusätzlich zu einem steuerbaren Magnetfeld kann auch ein ständig wirkendes oder statisches Magnetfeld zwischen der Ablegeeinheit und der Lauffläche vorgesehen sein. Damit kann die Ablegeeinheit unabhängig von der Fortbewegung an der Lauffläche gehalten werden, beispielsweise auch bei über Kopf arbeiten. Ferner kann so auch eine mittels der Ablegeeinheit auf das Fasermaterial aufgebrachte Kompaktierkraft auf einen vorbestimmten Wert eingestellt werden.

Anstatt der gemeinsamen Achse 15 kann eine andersartige Halterungseinrichtung für die Faserspulen vorgesehen sein, welche die Faserspuren innerhalb des Gehäuses 13 lagert. Die Halterungseinrichtung haltert bzw. lagert die Faserspuren und richtet diese stets bedarfsgerecht aus. Die Halterungseinrichtung selbst kann fast oder beweglich innerhalb des Gehäuses gelagert vorgesehen sein. Die Halterungseinrichtung kann insbesondere auch integral mit der Antriebseinrichtung ausgebildet sein. Beispielsweise kann die Halterungseinrichtung als ein innerhalb des Gehäuses 13 mit einem geringfügig geringeren Durchmesser vorgesehenes Innengehäuse ausgebildet sein, welches relativ zu dem Gehäuse 13 rotierbar ist. Beispielsweise kann es dazu über mechanische oder magnetische Lager mit dem Gehäuse 13 gekoppelt sein. Eine solche Ausführung kommt insbesondere zylinderförmigen Gehäuse 13 infrage.

### Bezugszeichenliste

- 1: Vorrichtung
- 2: Werkzeug
- 3: Ablegeeinheit
- 4: Fasermaterial
- 5: Steuereinrichtung
- 6; 6': Lauffläche
- 7;7';7": Kommunikationsmittel

- 9: Empfangseinrichtung
- 10: Antriebseinrichtung
- 11: Magnet
- 12: Magnet
- 13: Gehäuse
- 13': Gehäuseabschnitt
- 14: Faserspule
- 15: Achse
- 16: Fortbewegungsrichtung
- 17: vorlaufender Sensor
- 18: nachlaufender Sensor
- 19: Antriebsrolle
- 20: Stützrolle
- 21: Koppeleinrichtung
- 22: Ablageeinrichtung
- 23: Verbindungsabschnitt
- 24: Aktuator
- 25: Heizeinrichtungen
- 26: Legebahn
- 27: Bewegungsraum
- 28: Zwischenraum
- 29: Zwischenraum
- 30: Aufnahme
- 31: Zwischenhülse

## Patentansprüche

1. Ablegeeinheit (3) zum Herstellen eines Faserverbundbauteils, mit:
einem Gehäuse (13); und
einer Mehrzahl an Faserspulen (14), welche bei einer Fortbewegung der Ablegeeinheit (3) abwickelbar ausgebildet sind,
wobei die Faserspulen (14) innerhalb des Gehäuses (13) beweglich gelagert vorgesehen sind und zwischen den Faserspulen (14) jeweils ein Zwischenraum (28) vorgesehen ist, welcher zumindest abschnittsweise einen Bewegungsraum (27) der benachbarten Faserspulen (14) bildet, innerhalb dessen die Faserspulen (14) bewegbar sind.

2. Ablegeeinheit nach Anspruch 1,
**dadurch gekennzeichnet,**
**dass** die Faserspulen (14) jeweils unabhängig voneinander in eine Schrägstellung verkippbar vorgesehen sind.

3. Ablegeeinheit nach einem der vorangehenden Ansprüche,
**dadurch gekennzeichnet,**
**dass** im Bereich des Zwischenraums (28) der Faserspulen (14) jeweils unabhängig voneinander radial verschiebbare Gehäuseabschnitte (13') vorgesehen sind.

4. Ablegeeinheit nach Anspruch 3,
**dadurch gekennzeichnet,**
**dass** die Faserspulen (14) ausgebildet sind, insbesondere mit den Gehäuseabschnitten (13') wirkverbunden ausgebildet sind, um angepasst an eine radiale Verschiebung der Gehäuseabschnitte (13') in eine passende Schrägstellung zu verkippen.

5. Ablegeeinheit nach Anspruch 2 oder 4,
**dadurch gekennzeichnet,**
**dass** die Faserspulen (14) jeweils verkippbar auf einer gemeinsamen Achse (15) gelagert sind.

6. Ablegeeinheit nach einem der vorangehenden Ansprüche,
**dadurch gekennzeichnet,**
**dass** eine Heizeinrichtung (25) zum Aktivieren eines Harzes oder Binders des von den Faserspulen (14) abzulegenden Fasermaterials (4) vorgesehen ist.

7. Ablegeeinheit nach einem der vorangehenden Ansprüche,
**dadurch gekennzeichnet,**
**dass** ein Aktuator (24) zur Vorbehandlung einer Faserlage (4') des Fasermaterials (4) und/oder zur Vorbehandlung einer Oberfläche eines Werkzeugs (2), auf welchem das Fasermaterial (4) abzulegen ist, vorgesehen ist.

8. Ablegeeinheit nach einem der vorangehenden Ansprüche,
**dadurch gekennzeichnet,**
**dass** eine Ablageeinrichtung (22) zum definierten Ablegen und/oder zum Kompaktieren zumindest einer Faserlage (4') des Fasermaterials (4) vorgesehen ist.

9. Ablegeeinheit nach Anspruch 8,
**dadurch gekennzeichnet,**
**dass** die Ablageeinrichtung (22) integral mit der Heizeinrichtung (25) ausgebildet ist.

10. Ablegeeinheit nach Anspruch 8 oder 9,
**dadurch gekennzeichnet,**
**dass** ein der Ablageeinrichtung (22) vorlaufender Sensor (17) zur Messung der Faserqualität des Fasermaterials (4) vor dem Ablegen und/oder zur Messung der Eignung der Oberfläche des Werkzeugs (2), auf welchem das Fasermaterial (4) abzulegen ist, vorgesehen ist.

11. Ablegeeinheit nach einem der Ansprüche 8 bis 10,
**dadurch gekennzeichnet,**
**dass** ein der Ablageeinrichtung (22) nachlaufender Sensor (18) zum Erfassen der Anordnung und/oder Qualität der Ablage des Fasermaterials (4) vorgesehen ist.

12. Ablegeeinheit nach einem der Ansprüche 8 bis 10,
**dadurch gekennzeichnet,**
**dass** die Ablageeinrichtung (22) integral mit einer Antriebseinrichtung (10) zum Fortbewegen der Ablegeeinheit (3) ausgebildet ist.

13. Ablegeeinheit nach Anspruch 12,
**dadurch gekennzeichnet,**
**dass** die Antriebseinrichtung (10; 10') innerhalb des Gehäuses (13) vorgesehen ist und das Gehäuse (13) als Abrollfläche zur Fortbewegung der Ablegeeinheit (3) ausgebildet ist oder dass die Antriebseinrichtung (10; 10') als eine mit dem Gehäuse (13) gekoppelte Antriebsrolle (19) ausgebildet ist.

14. Verfahren zum Herstellen eines Faserverbundbauteils, mit den folgenden Verfahrensschritten:
Bereitstellen eines formgebenden Werkzeugs (2) und einer Ablegeeinheit (3), gemäß einem der vorangehenden Ansprüche 1 bis 13, wobei die Ablegeeinheit eine Mehrzahl lateral voneinander beabstandeter Faserspulen (14) aufweist;
Ablegen von Fasermaterial (4) mittels der Ablegeeinheit (3), wobei das Fasermaterial von den Faserspulen (14) abgewickelt und in Form mehrerer Legebahnen (26) auf dem formgebenden Werkzeug (2) abgelegt wird, wobei die Legebahnen (26) zumindest teilweise mit einem Zwischenraum (27) voneinander beabstandet abgelegt werden;
laterales Umpositionieren der Ablegeeinheit (3) um eine Breite einer Legebahn (26); und
erneutes Ablegen von Fasermaterial (4) mittels der Ablegeeinheit (3) auf dem formgebenden Werkzeug (2) in den Zwischenraum (27).

## Claims

1. Depositing unit (3) for producing a fibre-composite component, having:
a housing (13); and
a plurality of fibre bobbins (14) which are configured so as to be capable of being unwound in a movement of the depositing unit (3),
wherein the fibre bobbins (14) are provided so as to be movably mounted within the housing (13), and one intermediate space (28) which at least in portions forms a moving space (27) of the adjacent fibre bobbins (14) is in each case provided between the fibre bobbins (14), the fibre bobbins (14) being capable of being moved within said moving space (27) .

2. Depositing unit according to Claim 1,
**characterized in that**
the fibre bobbins (14) are in each case provided so as to be capable of tilting to an oblique position in a mutually independent manner.

3. Depositing unit according to one of the preceding claims,
**characterized in that**
housing portions (13') that are in each case radially displaceable in a mutually independent manner are provided in the region of the intermediate space (28) of the fibre bobbins (14).

4. Depositing unit according to Claim 3,
**characterized in that**
the fibre bobbins (14) are conceived for tilting to a matching oblique position in a manner adapted to a radial displacement of the housing portions (13'), in particular conceived so as to be operatively connected to the housing portions (13') .

5. Depositing unit according to Claim 2 or 4,
**characterized in that**
the fibre bobbins (14) are in each case mounted so as to be capable of tilting on a common axis (18).

6. Depositing unit according to one of the preceding claims,
**characterized in that**
a heating installation (25) for activating a resin or a binding agent of the fibrous material (4) to be deposited from the fibre bobbins (14) is provided.

7. Depositing unit according to one of the preceding claims,
**characterized in that**
an actuator (24) for the pre-treatment of a fibre tier (4') of the fibrous material (4) and/or for the pre-treatment of a surface of a tool (2) onto which the fibrous material (4) is to be deposited is provided.

8. Depositing unit according to one of the preceding claims,
**characterized in that**
a placing installation (22) for depositing in a defined manner and/or for compacting at least one fibre tier (4') of the fibrous material (4) is provided.

9. Depositing unit according to Claim 8,
**characterized in that**
the placing installation (22) is configured so as to be integral to the heating installation (25).

10. Depositing unit according to Claim 8 or 9,
**characterized in that**
a sensor (17) upstream of the placing installation (22) is provided for measuring the fibre quality of the fibrous material (4) before the depositing and/or for measuring the suitability of the surface of the tool (2) onto which the fibrous material (4) is to be deposited.

11. Depositing unit according to one of Claims 8 to 10,
**characterized in that**
a sensor (18) downstream of the placing installation (22) is provided for detecting the arrangement and/or the quality of the placement of the fibrous material (4).

12. Depositing unit according to one of Claims 8 to 10,
**characterized in that**
the placing installation (22) is configured so as to be integral to a drive installation (10) for moving the depositing unit (3).

13. Depositing unit according to Claim 12,
**characterized in that**
the drive installation (10; 10') is provided within the housing (13), and the housing (13) is configured as a rolling surface for moving the depositing unit (3), or **in that** the drive installation (10; 10') is configured as a drive roller (19) that is coupled to the housing (13).

14. Method for producing a fibre-composite component, comprising the following method steps:
- providing a shape-imparting tool (2) and a depositing unit (3) according to one of preceding Claims 1 to 13, wherein the depositing unit has a plurality of laterally spaced apart fibre bobbins (14);
- depositing fibrous material (4) by means of the depositing unit (3), wherein the fibrous material is unwound from the fibre bobbins (14) and in the form of a plurality of laid webs (26) is deposited on the shape-imparting tool (2), wherein the laid webs (26) are at least in part deposited so as to be mutually spaced apart by an intermediate space (27);
- laterally repositioning the depositing unit (3) by a width of a laid web (26); and
- renewed depositing of fibrous material (4) into the intermediate space (27) on the shape-imparting tool (2) by means of the depositing unit (3).

## Revendications

1. Unité de dépôt (3) pour la fabrication d'un composant composite fibreux, comportant :
un boîtier (13) ; et
une pluralité de bobines de fibres (14) qui peuvent être déroulées lorsque l'unité de dépôt (3) avance,
dans laquelle les bobines de fibres (14) sont prévues montées de manière mobile à l'intérieur du boîtier (13) et il est respectivement prévu entre les bobines de fibres (14) un espace intermédiaire (28) qui forme au moins par sections un espace de déplacement (27) des bobines de fibres (14) voisines, à l'intérieur duquel les bobines de fibres (14) peuvent être déplacées.

2. Unité de dépôt selon la revendication 1,
**caractérisée en ce que** les bobines de fibres (14) sont respectivement prévues de manière à pouvoir être inclinées indépendamment les unes des autres en position oblique.

3. Unité de dépôt selon l'une des revendications précédentes,
**caractérisée en ce qu'**il est prévu, dans la zone de l'espace intermédiaire (28) des bobines de fibres (14), des sections de boîtier (13') qui peuvent à chaque fois être déplacées radialement indépendamment les unes des autres.

4. Unité de dépôt selon la revendication 3,
**caractérisée en ce que** les bobines de fibres (14) sont réalisées, en particulier de manière fonctionnellement reliée aux sections de boîtier (13'), afin de s'incliner en une position oblique adaptée à un déplacement radial des sections de boîtier (13').

5. Unité de dépôt selon la revendication 2 ou 4,
**caractérisée en ce que** les bobines de fibres (14) sont respectivement montées sur un axe commun (15) de manière à pouvoir s'incliner.

6. Unité de dépôt selon l'une des revendications précédentes,
**caractérisée en ce qu'**il est prévu un dispositif de chauffage (25) destiné à activer une résine ou un liant du matériau fibreux (4) devant être déposé depuis les bobines de fibres (14).

7. Unité de dépôt selon l'une des revendications précédentes,
**caractérisée en ce qu'**il est prévu un actionneur (24) destiné au prétraitement d'une couche de fibres (4') du matériau fibreux (4) et/ou au prétraitement d'une surface d'un outil (2) sur lequel le matériau fibreux (4) doit être déposé.

8. Unité de dépôt selon l'une des revendications précédentes,
**caractérisée en ce qu'**il est prévu un dispositif de dépôt (22) destiné au dépôt et/ou au compactage définis d'au moins une couche de fibres (4') du matériau fibreux (4).

9. Unité de dépôt selon la revendication 8,
**caractérisée en ce que** le dispositif de dépôt (22) est réalisé de manière solidaire du dispositif de chauffage (25).

10. Unité de dépôt selon la revendication 8 ou 9,
**caractérisée en ce qu'**il est prévu un capteur (17) s'étendant devant le dispositif de dépôt (22) pour mesurer la qualité des fibres du matériau fibreux (4) avant le dépôt et/ou pour mesurer le caractère adéquat de la surface de l'outil (2) sur laquelle le matériau fibreux (4) doit être déposé.

11. Unité de dépôt selon l'une des revendications 8 à 10,
**caractérisée en ce qu'**il est prévu un capteur (18) qui suit le dispositif de dépôt (22) pour détecter la disposition et/ou la qualité du dépôt du matériau fibreux (4).

12. Unité de dépôt selon l'une des revendications 8 à 10,
**caractérisée en ce que** le dispositif de dépôt (22) est réalisé de manière solidaire d'un dispositif d'entraînement (10) destiné à faire avancer l'unité de dépôt (3).

13. Unité de dépôt selon la revendication 12,
**caractérisée en ce que** le dispositif d'entraînement (10 ; 10') est prévu à l'intérieur du boîtier (13) et le boîtier (13) est réalisé sous la forme d'une surface de déroulement destinée au déplacement de l'unité de dépôt (3) ou **en ce que** le dispositif d'entraînement (10 ; 10') est réalisé sous la forme d'un rouleau d'entraînement (19) couplé au boîtier (13).

14. Procédé de fabrication d'un composant composite fibreux, comprenant les étapes de procédé suivantes consistant à :
fournir un outil de formage (2) et une unité de dépôt (3) selon l'une des revendications 1 à 13 précédentes,
dans lequel l'unité de dépôt comprend une pluralité de bobines de fibres (14) espacées latéralement les unes des autres ;
déposer un matériau fibreux (4) au moyen de l'unité de dépôt (3), dans lequel le matériau fibreux est déroulé des bobines de fibres (14) et déposé sous la forme d'une pluralité de bandes de dépôt (26) sur l'outil de formage (2), dans lequel les bandes de dépôt (26) sont déposées au moins partiellement de manière espacée les unes des autres avec un espace intermédiaire (27) ;
décaler latéralement l'unité de dépôt (3) d'une largeur d'une bande de dépôt (26) ; et
déposer à nouveau le matériau fibreux (4) au moyen de l'unité de dépôt (3) sur l'outil de formage (2) dans l'espace intermédiaire (27).
